# EUROPEAN PATENT SPECIFICATION

(11) **EP 4 086 998 B1**
(45) Date of publication and mention of the grant of the patent: **03.12.2025**
(21) Application number: 21920114.2
(22) Date of filing: 14.10.2021
(51) Int. Cl.: H01M 10/04

(54) **COMPOUNDING DEVICE AND LAMINATION MACHINE**
COMPOUNDIERVORRICHTUNG UND KASCHIERMASCHINE
DISPOSITIF DE MÉLANGE ET MACHINE DE STRATIFICATION

(30) Priority: 09.02.2021 CN 202120368255 U
(43) Date of publication of application: 09.11.2022
(73) Proprietor: Wuxi Lead Intelligent Equipment Co., Ltd., Wuxi, Jiangsu 214123 (CN)
(72) Inventor: YAO, Junfu, Wuxi Jiangsu 214123 (CN)
(74) Representative: Petraz, Gilberto Luigi
(86) International application number: PCT/CN2021/123877
(87) International publication number: WO 2022/170779

(56) References cited:
- WO-A1-2021/017351
- CN-A- 112 018 453
- CN-A- 112 310 423
- CN-A- 112 820 930
- CN-U- 207 602 714
- CN-U- 214 477 588

## Description

### FIELD OF DISCLOSURE

The present application relates to a technical field of lithium battery manufacturing, and more specifically, to a composite device and a laminating machine.

### BACKGROUND

A manufacturing process of a lithium battery includes a step of laminating. In a current laminating step, belt-shaped pole sheets are usually cut to form sheet materials, and the sheet materials are attached to diaphragms to form a composite material strip, and then the composite material strip is folded by a laminating device to complete the laminating step. As the belt-shaped pole sheets need to be cut to form sheet materials with same size, and then the sheet materials are attached to the diaphragms, and finally folded by the laminating device, efficiency is low.

WO2021017351A1 relates to a laminating machine, comprising a membrane feeding apparatus, a first electrode plate feeding apparatus, a second electrode plate feeding apparatus, a membrane bag-making apparatus, an electrode plate pick-and-place apparatus, and a laminating apparatus; the first electrode plate feeding apparatus conveys first electrode plates; the membrane feeding apparatus conveys membranes, the membranes being attached to the side face of the first electrode plates; the membranes carrying the first electrode plates are moved to the membrane bag-making apparatus, and the bag-making apparatus performs bag-making on the membranes carrying the first electrode plates to form electrode plate packages; the electrode plate pick-and-place apparatus sucks up second electrode plates conveyed by the second electrode plate feeding apparatus and having the opposite polarity to the first electrode plates, and attaches the second electrode plates in sequence to the membranes of the first electrode plate packages, the second electrode plates attached to two adjacent electrode plate packages being positioned on different surfaces of the membranes to form a battery core assembly; and the laminating apparatus laminates the battery core assembly.

CN112310423A relates to a laminated battery cell production system and a laminated battery cell molding method. The laminated battery cell production system comprises a first conveying mechanism capable of providing an anode, an isolating membrane conveying mechanism which is arranged at the downstream of the first conveying mechanism and can provide isolating membranes arranged in pairs, a markmaking mechanism which is arranged at the upstream of the isolating membrane conveying mechanism, and is used for setting marks on the anode, a second conveying mechanism which is arranged at the downstream of the isolating membrane conveying mechanism and is used for providing a plurality of cathodes for the isolating membrane, a compounding mechanism which is arranged at the downstream of the second conveying mechanism and is used for compounding the anode, the isolating membrane and the cathode to form a to-be-laminated group, and a laminating mechanism which is arranged at the downstream of the compounding mechanism and can be used for laminating the to-be-laminated group along the mark in a reciprocating manner so as to form a laminated battery cell.

### SUMMARY

The invention is defined in the appended set of claims.

### BRIEF DESCRIPTION OF DRAWINGS

In order to illustrate embodiments of the present application or a technical solution in the prior art clearly, the accompanying drawings that need to be used in a description of the embodiments or the prior art will be briefly described as follows. It should be apparent that the drawings in the following description merely illustrate some embodiments of the present application. For those skilled in the art, other drawings may be acquired according to the disclosed drawings without devoting efforts.
FIG. 1 is a schematic structural diagram of a composite device provided by an embodiment of the present application.
FIG. 2 is a schematic structural diagram of a first electrode material strip processed by a crease mechanism in the composite device shown in FIG. 1.
FIG. 3 is a schematic structural diagram of a laminating machine provided in a first embodiment of the present application.
FIG. 4 is a schematic structural diagram of a laminating machine provided in a second embodiment of the present application.
FIG. 5 is a schematic structural diagram of the laminating machine in a state provided in a third embodiment of the present application.
FIG. 6 is a schematic structural diagram of the laminating machine shown in FIG. 5 in another state.
FIG. 7 is a schematic structural diagram of the laminating machine shown in FIG. 5 in yet another state.
FIG. 8 is a schematic structural diagram of the laminating machine provided in a fourth embodiment of the present application.

### DETAILED DESCRIPTION

To make the purpose, technical solutions and advantages of this application clearer, the application will be further described in detail below in conjunction with the accompanying figures and embodiments. In the following description, numerous specific details are set forth in order to fully understand the present application. However, this application can be in many other ways than those described herein. Those skilled in the art can make similar promotion without departing from the present disclosure connotation case. Accordingly, this application is therefore not limited to the specific embodiments disclosed below.

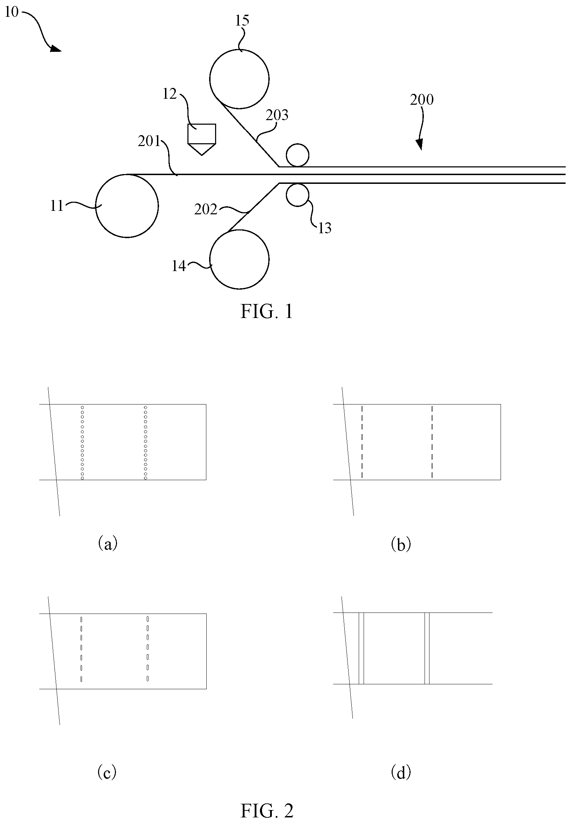

As shown in FIG. 1, a composite device 10 provided by an embodiment not according to the invention includes a first electrode material strip unwinding mechanism 11, a crease mechanism 12, and a first composite mechanism 13. The first electrode material strip unwinding mechanism 11 is configured to unwind a first electrode material strip 201, the crease mechanism 12 is disposed downstream of the first electrode material strip unwinding mechanism 11, and the first composite mechanism 13 is disposed downstream of the crease mechanism 12.

The crease mechanism 12 is configured to form a plurality of creases spaced apart along a length direction of a first electrode material strip 201 and extending along a width direction on the first electrode material strip 201, and the first composite mechanism 13 is configured to combine a first diaphragm 202 and a second diaphragm 203 on opposite sides of the first electrode material strip 201 to form a first composite material strip 200.

The first electrode material strip 201 is a belt-shaped pole sheet.

By arranging the above-mentioned composite device 10, the crease mechanism 12 forms the plurality of creases on the first electrode material strip 201, and the first diaphragm 202 and the second diaphragm 203 are attached to two sides of the first electrode material strip 201 to form the first composite material strip 200. During a process of folding the first composite material strip 200, it may be directly folded along the creases. Compared with the prior art of firstly cutting off pole sheets into sheet materials and then laminating them, the composite device 10 uses belt-shaped pole sheets directly without cutting, which effectively improves efficiency of subsequent lamination. Meanwhile, more burrs may be prevented from cutting the pole sheets, so that quality of batteries is improved.

It should be noted that the composite device 10 is configured to form the first composite material strip 200. In this embodiment, the first electrode material strip 201 of the first composite material strip 200 has the plurality of creases, so as to facilitate subsequent folding. When the first composite material strip 200 is folded, a pole sheet may be laid on the first composite material strip 200 and then folded to form a battery cell according to an actual process, which will not be repeated in this embodiment.

In addition, it should be noted that hardness of the pole sheet is greater than hardness of the first diaphragm 202 and the second diaphragm 203. An existing laminating method is to fold the pole sheet in view of a sheet material, whereas in this embodiment, it is convenient to fold the belt-shaped pole sheet, so the creases are formed on the first electrode material strip 201, namely, the belt-shaped pole sheet.

In some embodiments, the composite device 10 further includes a first diaphragm unwinding mechanism 14. The first diaphragm unwinding mechanism 14 is disposed upstream of a composite mechanism and is configured to unwind the first diaphragm 202. Furthermore, the composite device 10 further includes a second diaphragm unwinding mechanism 15. The second diaphragm unwinding mechanism 15 is disposed upstream of the composite mechanism and is configured to unwind the second diaphragm 203.

In some embodiments, the crease mechanism 12 includes a laser cutting head or a cutter, the laser cutting head or the cutter is configured to form the creases on the belt-shaped pole sheet along a width direction thereof, and the plurality of creases are evenly spaced apart along a length direction thereof.

It should be noted that, as shown in (a), (b), and (c) in FIG. 2, the creases on the belt-shaped pole sheet may be formed by penetrating holes opened on the pole sheet by using the laser cutting head or the cutter, and the penetrating holes are sequentially spaced apart along a width direction of the first electrode material strip 201 and penetrates the first electrode material strip 201 along a thickness direction thereof. The penetrating holes include one or more of circular holes, rectangular holes, and strip holes.

Definitely, as shown in (d) in FIG. 2, the creases may also be folded areas extending longitudinally along the width direction of the first electrode material strip 201, and a part of carbon powder in a dotted area is removed by laser, so that a carbon powder layer in this area is less than the carbon powder layer in other positions. That is, a thickness of the folded areas of the first electrode material strip 201 is less than a thickness of other positions of the first electrode material strip 201, resulting in weakening of strength of the areas, which facilitates folding.

In some embodiments, surfaces of opposite sides of the first diaphragm 202 and the second diaphragm 203 are provided with adhesives. After the first diaphragm 202 and the second diaphragm 203 of the first composite material strip 200 are initially attached to the belt-shaped pole sheet, through heating and pressing of the first composite mechanism 13, namely compounding treatment, the adhesives are melted, and the first diaphragm 202 and the second diaphragm 203 are bonded together with the belt-shaped pole sheet to form the first composite material strip 200. Meanwhile, during subsequent folding, side surfaces of the first diaphragm 202 and the second diaphragm 203 facing away from the belt-shaped pole sheet are also secured with adhesion by adhesives.

The present application also provides a laminating machine, which includes the above-mentioned composite device 10, wherein after the crease mechanism 12 of the above-mentioned composite device 10 forms the plurality of creases on the first electrode material strip 201, a folded sheet is formed between two adjacent creases on the first electrode material strip 201.

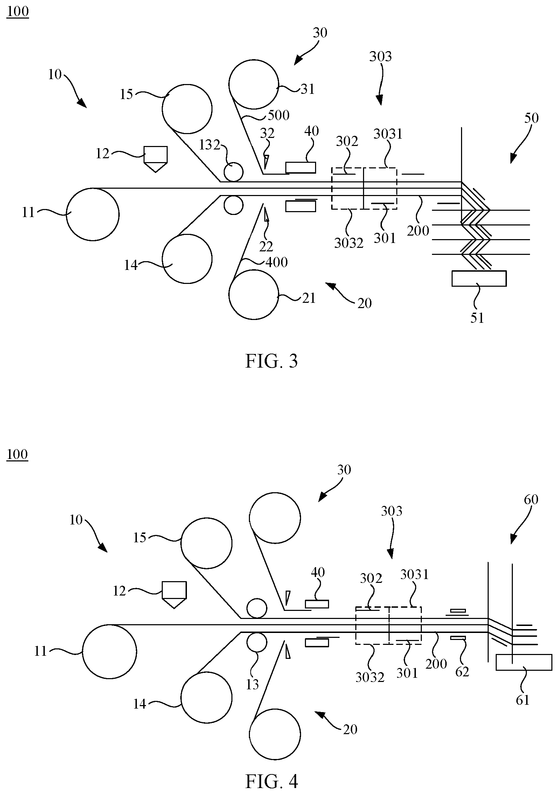

Referring to FIG. 3, in a first embodiment not according to the invention, the laminating machine 100 further includes a first sheet material device 20 and a second sheet material device 30. The first sheet material device 20 is configured to dispose a plurality of first sheet materials 301 on a side surface of the first composite material strip 200, and the second sheet material device 30 is configured to dispose a plurality of second sheet materials 302 on another side surface of the first composite material strip 200; and the first sheet materials 301 and the second sheet materials 302 are alternately spaced apart along a length direction of the first composite material strip 200, and two adjacent first sheet materials 301 and the second sheet materials 302 along the length direction of the first composite material strip 200 correspond to two adjacent folded sheets, respectively.

Wherein the first sheet material 301 and the second sheet material 302 are both pole sheets. When folding is performed along the creases between adjacent folded sheets, a battery cell in which the first sheet material 301, the first composite material strip 200, the second sheet material 302, and the first composite material strip 200 are stacked in sequence may be formed. The creases are formed on the belt-shaped pole sheet in advance, which facilitates folding and improves folding efficiency.

It should be noted that, in the embodiment shown in FIG. 3, when the first electrode material strip 201 is a negative electrode, the first sheet material 301 and the second sheet material 302 are both positive pole sheets. Whereas when the first electrode material strip 201 is a positive electrode, the first sheet material 301 and the second sheet material 302 are both negative pole sheets. The first diaphragm 202 and the second diaphragm 203 may be same.

Furthermore, the first sheet material device 20 is configured to dispose a plurality of first sheet materials 301 on a side surface of the first diaphragm 202 facing away from the first electrode material strip 201, and the second sheet material device 30 is configured to dispose a plurality of second sheet materials 302 on a side surface of the second diaphragm 203 facing away from the first electrode material strip 201.

As a result, when folded, the battery cell is formed by sequentially stacking the first sheet material 301, the first diaphragm 202, the folded sheet, the second diaphragm 203, the second sheet material 302, the second diaphragm 203, the folded sheet, and the first diaphragm 202 in a predetermined number. Specifically, the first sheet material 301 (the second sheet material 302) is a pole sheet and is one of the positive electrode or the negative electrode, and the first electrode material strip 201 is another of the positive electrode or the negative electrode. After the first sheet material 301 and the second sheet material 302 are combined with the first composite material strip 200 and then folded repeatedly, a battery cell will be formed by sequentially and cyclically stacking a diaphragm, a positive pole sheet, a diaphragm, and a negative pole sheet.

It should be appreciated that the plurality of creases on the first electrode material strip 201 are evenly spaced apart along a length direction of the first electrode material strip 201, and each first sheet material 301 and each second sheet material 302 corresponds to the folded sheet, so all the first sheet materials 301 and all the second sheet materials 302 are evenly spaced apart along the length direction of the first electrode material strip 201, namely, along the length direction of the first composite material strip 200.

In practical application, a distance between two adjacent first sheet materials 301 along the length direction of the first composite material strip 200 is greater than a width of the second sheet materials 302, and a distance between two adjacent second sheet materials 302 along the length direction of the first composite material strip 200 is greater than a width of the first sheet materials 301.

It should be noted that, in FIG. 3, width directions of the first sheet material 301 and the second sheet material 302 are the length direction of the first composite material strip 200.

In this embodiment, the first sheet material device 20 includes a second electrode material strip unwinding mechanism 21 and a first cutting mechanism 22. The second electrode material strip unwinding mechanism 21 is configured to unwind a second electrode material strip 400. The first cutting mechanism 22 is disposed downstream of the second electrode material strip unwinding mechanism 21, and the first cutting mechanism 22 is configured to cut the second electrode material strip 400 to form the first sheet material 301.

Furthermore, the second sheet material device 30 includes a third electrode material strip unwinding mechanism 31 and a second cutting mechanism 32. The third electrode material strip unwinding mechanism 31 is configured to unwind a third electrode material strip 500. The second cutting mechanism 32 is disposed downstream of the third electrode material strip unwinding mechanism 31, and the second cutting mechanism 32 is configured to cut the third electrode material strip 500 to form the second sheet material 302.

It should be appreciated that the above-mentioned second electrode material strip 400 and third electrode material strip 500 are same as the first electrode material strip 201, and they are all belt-shaped pole sheets. After the second electrode material strip 400 and the third electrode material strip 500 are cut by the first cutting mechanism 22 and the second cutting mechanism 32 to form the first sheet material 301 and the second sheet material 302, respectively, the first sheet material 301 and the second sheet material 302 may be initially attached to the first diaphragm 202 and the second diaphragm 203, respectively. In an alternative way, the first sheet material 301 and the second sheet material 302 may be initially attached to the first diaphragm 202 and the second diaphragm 203 respectively by additionally disposing other mechanisms, which is not limited here.

In practical application, the laminating machine further includes a second composite mechanism 40. The second composite mechanism 40 is disposed downstream of the first sheet material device 20 and the second sheet material device 30 and is configured to combine the first sheet material 301 and the second sheet material 302 with the first composite material strip 200, so that the first sheet material 301 and the second sheet material 302 are attached to the first composite material strip 200 to form a second composite material strip 303.

Referring to FIG. 4, in a second embodiment not according to the invention, the laminating machine 100 includes a first sheet material device 20, a second sheet material device 30, and a second composite mechanism 40. The first sheet material device 20 is configured to dispose a plurality of first sheet materials 301 on a side surface of the first composite material strip 200, and the second sheet material device 30 is configured to dispose a plurality of second sheet materials 302 on another side surface of the first composite material strip 200; and the first sheet materials 301 and the second sheet materials 302 are alternately spaced apart along a length direction of the first composite material strip 200, and two adjacent first sheet materials 301 and the second sheet materials 302 along the length direction of the first composite material strip 200 correspond to two adjacent folded sheets, respectively. The second composite mechanism 40 is disposed downstream of the first sheet material device 20 and the second sheet material device 30 and is configured to combine the first sheet material 301 and the second sheet material 302 with the first composite material strip 200, so that the first sheet material 301 and the second sheet material 302 are attached to the first composite material strip 200 to form a second composite material strip 303.

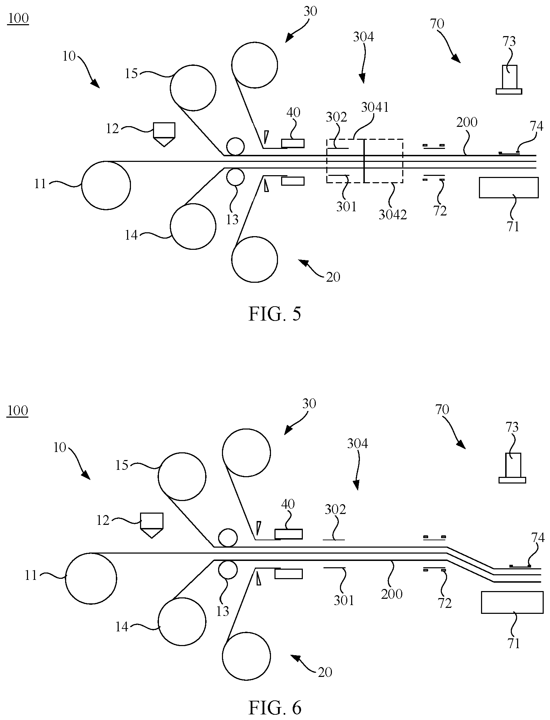

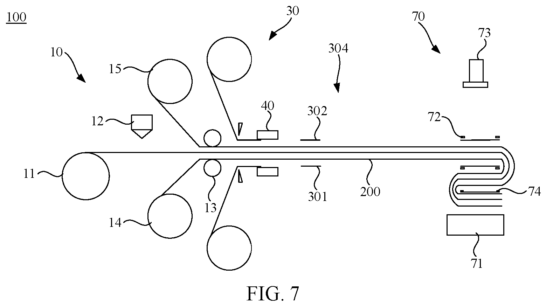

Referring to FIGs. 5-7, in a third embodiment according to the invention, the laminating machine 100 further includes a first sheet material device 20, a second sheet material device 30, and a second composite mechanism 40. The first sheet material device 20 is configured to dispose a plurality of first sheet materials 301 on a side surface of the first composite material strip 200, the second sheet material device 30 is configured to dispose a plurality of second sheet materials 302 on another side surface of the first composite material strip 200, and the first sheet material 301 and the second sheet material 302 are disposed on two sides of one of two adjacent folded sheets. The second composite mechanism 40 is disposed downstream of the first sheet material device 20 and the second sheet material device 30 and is configured to combine the first sheet material 301 and the second sheet material 302 with the first composite material strip 200, so that the first sheet material 301 and the second sheet material 302 are attached to the first composite material strip 200 to form a third composite material strip 304.

In this embodiment, structures of the first sheet material device 20, the second sheet material device 30, and the second composite mechanism 40 are same as the first sheet material device 20, the second sheet material device 30, and the second composite mechanism 40 in the previous embodiment, and a difference is that, in this embodiment, the first sheet material device 20 and the second sheet material device 30 are both placed on opposite sides of the first composite material strip 200. Therefore, in this embodiment, the same reference numerals are used for the first sheet material device 20 and the second sheet material device 30 to facilitate better understanding, and the same reference numerals are also used for subsequent identical mechanisms and devices.

In this embodiment, the third composite strip 304 includes a plurality of third stacking components 3041 and a plurality of fourth stacking components 3042, and the third stacking components 3041 and the fourth stacking components 3042 are alternately connected. The third stacking components 3041 include the first sheet material 301, the first diaphragm 202, the folded sheet, the second diaphragm 203, and the second sheet material 302 stacked in sequence, and the fourth stacking components 3042 include the first diaphragm 202, the folded sheet, and the second diaphragm 203 stacked in sequence.

In this embodiment, the laminating machine further includes a third laminating device 70. The third laminating device 70 is disposed downstream of the second composite mechanism 40 and is configured to fold the third composite material strip 304 along the creases, so that the plurality of third stacking components 3041 and the plurality of fourth stacking components 3042 are alternately stacked to form a battery cell.

Furthermore, the third laminating device 70 includes a laminating platform 71 and a clamping claw 72. The laminating platform 71 is disposed downstream of the second composite mechanism 40, and the laminating platform 71 can reciprocate along a vertical direction. The clamping claw 72 reciprocates between a material discharge end of the second composite mechanism 40 and the laminating platform 71 and is used to clamp the third composite material strip 304 and to fold the third composite material strip 304 and to place it on the laminating platform 71.

In practical application, the third laminating device 70 further includes a pressing plate 73, and the pressing plate 73 can reciprocate in the vertical direction and is used to press against the battery cell on the laminating platform 71, so that the first sheet material 301, the first composite material strip 200, the second sheet material 302, and the first composite material strip 200 stacked in sequence are pressed tightly to ensure that each layer structure in the battery cell is tightly attached.

Specifically, the third laminating device 70 further includes a pressing member 74, and the pressing member 74 can move in the vertical direction along with the laminating platform 71 and can move relative to the laminating platform 71 for pressing against the battery cell.

It should be noted that after the clamping claw 72 clamps the third composite material strip 304 and folds the third composite material strip 304 and places it on the laminating platform 71, the pressing plate 73 presses the battery cell, and the clamping claw 72 is withdrawn, and then the pressing member 74 presses the battery cell, and the pressing plate 73 is withdrawn, so as to prevent the battery cell from loosening or displacement during a laminating process, which affects accuracy of lamination.

Please refer to FIGs. 5-7, an embodiment is used as an example to illustrate: initially, a piece of second sheet material 302 is placed at the head end of the first composite strip 200 (corresponding to a position of a first folded sheet), and then the first sheet material 301 and the second sheet material 302 corresponding to a third folded sheet are placed on the first composite strip 200, and then the first sheet material 301 and the second sheet material 302 corresponding to a fifth folded sheet are placed; in such a way, the first sheet material 301 and the second sheet material 302 are repeatedly placed between every other folded sheet, and the first sheet material 301 and the second sheet material 302 placed each time correspond to a same folded sheet. The first sheet material 301 and the second sheet material 302 are placed on the first composite material strip 200 and then are sequentially processed by a feeding mechanism, a heating mechanism, and a rolling mechanism to form the third composite strip 304. In other words, the head end is the third stacking component 3041 with only the second sheet material 302 when folded in this embodiment.

In other embodiments, the third stacking component 3041 of the third composite strip 304 or the fourth stacking component 3042 of the third composite strip 304 may be located at the head end when folded. Folding methods in the three embodiments are same. Here, with reference to FIGs. 5-7 in combination, the head end is the third stacking component 3041 with only the second sheet material 302 when folded is used as an example for description:

Before grabbing, the pressing plate 73 moves a position to prevent interference, and the clamping claw 72 grabs the third composite material strip 304 at the material discharge end of the second composite mechanism 40 and horizontally moves it to the laminating platform 71. At this time, the third stacking component 3041 with only the second sheet material 302 at the head end of the first composite material strip 200 is in contact with the laminating platform 71, and then the pressing plate 73 presses downward to compress the third stacking component 3041 tightly, and the clamping claw 72 is withdrawn and returned to the material discharge end of the second composite mechanism 40 to continue to grab a second third stacking component 3041, and then the pressing member 74 presses against the third stacking component 3041, and the pressing plate 73 is withdrawn after pressing of the pressing member 74.

Next, the clamping claw 72 grabs the second third stacking component 3041 and horizontally moves it to the laminating platform 71, and the pressing member 74 keeps tightly pressing the second third stacking component 3041 and descends along with the laminating platform 71; the third stacking component 3041 at the head end of the third composite material strip 304 descends accordingly. When the clamping claw 72 grabs the second third stacking component 3041 and horizontally moves it to the laminating platform 71, the fourth stacking component 3042 adjacent to the third stacking component 3041 at the head end will cover the third stacking component 3041 at the head end. Moreover, the grabbed third stacking component 3041 will also cover the fourth stacking component 3042, so as to perform folding.

After folding, the pressing plate 73 presses downward tightly again, and then the clamping claw 72 is withdrawn to continue to grab a sequential third stacking component 3041, and then the pressing member 74 is pulled out and presses against a yet another third stacking component 3041 again and descends with the laminating platform 71.

It should be appreciated that a grabbing method of the clamping claw 72 is to grab at intervals of one stacking component, namely, there is an interval of one stacking component between the stacking component grabbed currently and the stacking component grabbed at a previous time. In a case of the third stacking component 3041 grabbed as described above, as the third stacking component 3041 and the fourth stacking component 3042 are alternately connected, when the clamping claw 72 grabs the second third stacking component 3041 directly above a previous third stacking component 3041, the fourth stacking component 3042 between the two third stacking components 3041 will be folded.

It should be appreciated that actions of the clamping claw 72 and the laminating platform 71 of the third laminating device 70 in this embodiment are same as those of the clamping claw 62 and the laminating platform 61 in the second laminating device 60 in the above-mentioned embodiment.

In combination with the above-mentioned embodiments, it should be noted that the first sheet material 301, the second sheet material 302, the third sheet material 601, and the folded sheet in the above-mentioned embodiments all are pole sheets, and the first diaphragm 202 and the second diaphragm 203 both are diaphragms, so the battery cell, which is formed by folding, is actually a structure formed by stacking the pole sheets and the diaphragms multiple times.

In a specific embodiment, the first electrode material strip 201 is a negative electrode, and the first sheet material 301, the second sheet material 302, and the third sheet material 601 are positive pole sheets. In another specific embodiment, the first electrode material strip 201 is a positive electrode, and the first sheet material 301, the second sheet material 302, and the third sheet material 601 are negative pole sheets.

## Claims

1. A laminating machine (100), **characterized in that** the laminating machine (100) comprises a composite device (10), the composite device (10) comprises:
a first electrode material strip unwinding mechanism (11) configured to unwind a first electrode material strip (201);
a crease mechanism (12) disposed downstream of the first electrode material strip unwinding mechanism (11) and configured to form a plurality of creases spaced apart along a length direction of a first electrode material strip (201) and extending along a width direction of the first electrode material strip (201) on the first electrode material strip (201) in a path;
a first composite mechanism (13) disposed downstream of the crease mechanism (12) and configured to combine a first diaphragm (202) and a second diaphragm (203) on opposite sides of the first electrode material strip (201) to form a first composite material strip (200); and
a first diaphragm unwinding mechanism (14) and a second diaphragm unwinding mechanism (15), and the first diaphragm unwinding mechanism (14) and the second diaphragm unwinding mechanism (15) are both disposed upstream of the first composite mechanism (13); the first diaphragm unwinding mechanism (14) is configured to unwind the first diaphragm (202), and the second diaphragm unwinding mechanism (15) is configured to unwind the second diaphragm (203),
a folded sheet is formed between two adjacent creases on the first electrode material strip (201);
the laminating machine (100) further comprises a first sheet material device (20), a second sheet material device (30), and a second composite mechanism (40);
wherein the first sheet material device (20) comprises a second electrode material strip unwinding mechanism (21) and a first cutting mechanism (22). The second electrode material strip unwinding mechanism (21) is configured to unwind a second electrode material strip (400). The first cutting mechanism (22) is disposed downstream of the second electrode material strip unwinding mechanism (21), and the first cutting mechanism (22) is configured to cut the second electrode material strip (400) to form the first sheet material (301),
wherein the second sheet material device (30) comprises a third electrode material strip unwinding mechanism (31) and a second cutting mechanism (32). The third electrode material strip unwinding mechanism (31) is configured to unwind a third electrode material strip (500). The second cutting mechanism (32) is disposed downstream of the third electrode material strip unwinding mechanism (31), and the second cutting mechanism (32) is configured to cut the third electrode material strip (500) to form the second sheet material (302),
the first sheet material device (20) is configured to dispose a plurality of first sheet materials (301) on a side surface of the first composite material strip (200), the second sheet material device (30) is configured to dispose a plurality of second sheet materials (302) on another side surface of the first composite material strip (200), and the first sheet material (301) and the second sheet material (302) are disposed on two sides of one of two adjacent folded sheets;
the second composite mechanism (40) is disposed downstream of the first sheet material device (20) and the second sheet material device (30) and is configured to combine the first sheet material (301) and the second sheet material (302) with the first composite material strip (200), so that the first sheet material (301) and the second sheet material (302) are attached to the first composite material strip (200) to form a third composite material strip (304),
the third composite material strip (304) comprises a plurality of third stacking components (3041) and a plurality of fourth stacking components (3042), and the third stacking components (3041) and the fourth stacking components (3042) are alternately connected; the third stacking components (3041) comprise the first sheet material (301), the first diaphragm (202), the folded sheet, the second diaphragm (203), and the second sheet material (302) that are stacked in sequence, and the fourth stacking components (3042) comprise the first diaphragm (202), the folded sheet, and the second diaphragm (203) that are stacked in sequence,
**characterized in that**
the laminating machine (100) further comprises a third laminating device (70), and the third laminating device (70) is disposed downstream of the second composite mechanism (40) and is configured to fold the third composite material strip (304) along the creases, so that the plurality of third stacking components (3041) and the plurality of fourth stacking components (3042) are alternately stacked to form a battery cell,
wherein the third laminating device (70) comprises a laminating platform (71) and a clamping claw (72) and a pressing plate (73), wherein the laminating platform (71) can reciprocate along a vertical direction, the clamping claw (72) reciprocates between a material discharge end of the second composite mechanism (40) and the laminating platform (71) and is used to clamp the third composite material strip (304) and to fold the third composite material strip (304) and to place it on the laminating platform (71), and the pressing plate (73) can reciprocate along the vertical direction and is used to press against the battery cell on the laminating platform (71),
wherein the third laminating device (70) further includes a pressing member (74), and the pressing member (74) can move in the vertical direction along with the laminating platform (71) and can move relative to the laminating platform (71) for pressing against the battery cell.

2. The laminating machine (100) as claimed in claim 1, **characterized in that** the crease mechanism (12) comprises a laser cutting head or a cutter.

3. The laminating machine (100) as claimed in claim 1, **characterized in that** the creases are penetrating holes sequentially spaced apart along the width direction of the first electrode material strip (201) and penetrating the first electrode material strip (201) along its thickness direction.

4. The laminating machine (100) as claimed in claim 3, **characterized in that** the penetrating holes comprise one or more of circular holes, rectangular holes, or strip holes.

5. The laminating machine (100) as claimed in claim 1, **characterized in that** the creases are folded areas extending along the width direction of the first electrode material strip (201), and a thickness of the folded areas of the first electrode material strip (201) is less than a thickness of other positions of the first electrode material strip (201).

## Patentansprüche

1. Laminiermaschine (100), **dadurch gekennzeichnet, dass** die Laminiermaschine (100) eine Verbundvorrichtung (10) umfasst, wobei die Verbundvorrichtung (10) umfasst:
einen ersten Elektrodematerialstreifenabwickelmechanismus (11), der konfiguriert ist, um einen ersten Elektrodenmaterialstreifen (201) abzuwickeln;
einen stromabwärts des ersten Elektrodematerialstreifenabwickelmechanismus (11) angeordneten Faltenmechanismus (12), der konfiguriert ist, um eine Vielzahl von entlang einer Längenrichtung eines ersten Elektrodematerialstreifens (201) beabstandeten und sich entlang einer Breitenrichtung des ersten Elektrodematerialstreifens (201) auf dem ersten Elektrodematerialstreifen (201) in einem Pfad erstreckenden Falten zu bilden;
einen stromabwärts des Faltmechanismus (12) angeordneten ersten Verbundmechanismus (13), der konfiguriert ist, um eine erste Membran (202) und eine zweite Membran (203) auf gegenüberliegenden Seiten des ersten Elektrodenmaterialstreifens (201) zu einem ersten Verbundmaterialstreifen (200) zu kombinieren; und
einen ersten Membranabwickelmechanismus (14) und einen zweiten Membranabwickelmechanismus (15), wobei der erste Membranabwickelmechanismus (14) und der zweite Membranabwickelmechanismus (15) beide stromaufwärts des ersten Verbundmechanismus (13) angeordnet sind; der erste Membranabwickelmechanismus (14) zum Abwickeln der ersten Membran (202) konfiguriert ist, und der zweite Membranabwickelmechanismus (15) zum Abwickeln der zweiten Membran (203) konfiguriert ist,
wobei zwischen zwei benachbarten Falten auf dem ersten Elektrodenmaterialstreifen (201) ein gefaltetes Blech konfiguriert ist;
wobei die Laminiermaschine (100) ferner eine erste Blechmaterialvorrichtung (20), eine zweite Blechmaterialvorrichtung (30) und einen zweiten Verbundmechanismus (40) umfasst;
wobei die erste Blechmaterialvorrichtung (20) einen zweiten Elektrodenmaterialstreifenabwickelmechanismus (21) und einen ersten Schneidmechanismus (22) umfasst, wobei der zweite Elektrodenmaterialstreifenabwickelmechanismus (21) konfiguriert ist, um einen zweiten Elektrodenmaterialstreifen (400) abzuwickeln, wobei der erste Schneidmechanismus (22) stromabwärts des zweiten Elektrodenmaterialstreifenabwickelmechanismus (21) angeordnet ist, und der erste Schneidmechanismus (22) konfiguriert ist, um den zweiten Elektrodenmaterialstreifen (400) zu schneiden, um das erste Blechmaterial (301) zu bilden,
wobei die zweite Blechmaterialvorrichtung (30) einen dritten Elektrodenmaterialstreifenabwickelmechanismus (31) und einen zweiten Schneidmechanismus (32) umfasst,
wobei der dritte Elektrodenmaterialstreifenabwickelmechanismus (31) konfiguriert ist, um einen dritten Elektrodenmaterialstreifen (500) abzuwickeln, wobei der zweite Schneidmechanismus (32) stromabwärts des dritten Elektrodenmaterialstreifenabwickelmechanismus (31) angeordnet ist, und der zweite Schneidmechanismus (32) konfiguriert ist, um den dritten Elektrodenmaterialstreifen (500) zu schneiden, um das zweite Blechmaterial (302) zu bilden,
wobei die erste Blechmaterialvorrichtung (20) konfiguriert ist, um mehrere erste Blechmaterialen (301) auf einer Seitenfläche des ersten Verbundmaterialstreifens (200) anzuordnen, wobei die zweite Blechmaterialvorrichtung (30) konfiguriert ist, um mehrere zweite Blechmaterialen (302) auf einer anderen Seitenfläche des ersten Verbundmaterialstreifens (200) anzuordnen, und das erste Blechmaterial (301) und das zweite Blechmaterial (302) auf zwei Seiten eines von zwei benachbarten gefalteten Blechen angeordnet sind;
wobei der zweite Verbundmechanismus (40) stromabwärts der ersten Blechmaterialvorrichtung (20) und der zweiten Blechmaterialvorrichtung (30) angeordnet ist und konfiguriert ist, um das erste Blechmaterial (301) und das zweite Blechmaterial (302) mit dem ersten Verbundmaterialstreifen (200) zu kombinieren, so dass das erste Blechmaterial (301) und das zweite Blechmaterial (302) an dem ersten Verbundmaterialstreifen (200) angebracht sind, um einen dritten Verbundmaterialstreifen (304) zu bilden,
wobei der dritte Verbundmaterialstreifen (304) mehrere dritte Stapelkomponenten (3041) und mehrere vierte Stapelkomponenten (3042) umfasst, und die dritten Stapelkomponenten (3041) und die vierten Stapelkomponenten (3042) abwechselnd verbunden sind; wobei die dritten Stapelkomponenten (3041) das erste Blechmaterial (301), die erste Membran (202), das gefaltete Blech, die zweite Membran (203) und das zweite Blechmaterial (302), die in einer Reihenfolge gestapelt sind, umfassen, und die vierten Stapelkomponenten (3042) die erste Membran (202), das gefaltete Blech und die zweite Membran (203), die in einer Reihenfolge gestapelt sind, umfassen,
**dadurch gekennzeichnet,**
**dass** die Laminiermaschine (100) ferner eine dritte Laminiervorrichtung (70) umfasst, und die dritte Laminiervorrichtung (70) stromabwärts des zweiten Verbundmechanismus (40) angeordnet und konfiguriert ist, um den dritten Verbundmaterialstreifen (304) entlang der Falten zu falten, so dass die mehreren dritten Stapelkomponenten (3041) und die mehreren vierten Stapelkomponenten (3042) abwechselnd gestapelt sind, um eine Batteriezelle zu bilden,
wobei die dritte Laminiervorrichtung (70) eine Laminierplattform (71) und eine Klemmklaue (72) und eine Pressplatte (73) umfasst, wobei sich die Laminierplattform (71) entlang einer vertikalen Richtung hin- und herbewegen kann, wobei die Klemmklaue (72) zwischen einem Materialauslassende des zweiten Verbundmechanismus (40) und der Laminierplattform (71) hin- und herbewegt wird und konfiguriert ist, um den dritten Verbundmaterialstreifen (304) zu klemmen und ihn zu falten und ihn auf die Laminierplattform (71) zu platzieren, und sich die Pressplatte (73) entlang der vertikalen Richtung hin- und herbewegt und zum Pressen gegen die Batteriezelle auf der Laminierplattform (71) konfiguriert ist,
wobei die dritte Laminiervorrichtung (70) ferner ein Pressglied (74) umfasst, und das Pressglied (74) sich zusammen mit der Laminierplattform (71) in vertikaler Richtung bewegen kann und sich relativ zur Laminierplattform (71) zum Pressen gegen die Batteriezelle bewegen kann.

2. Laminiermaschine (100) nach Anspruch 1, **dadurch gekennzeichnet, dass** der Faltmechanismus (12) einen Laserschneidkopf oder einen Schneider umfasst.

3. Laminiermaschine (100) nach Anspruch 1, **dadurch gekennzeichnet, dass** die Falten Durchgangslöcher, die entlang der Breitenrichtung des ersten Elektrodenmaterialstreifens (201) sequentiell beabstandet sind und entlang der Dickenrichtung des ersten Elektrodenmaterialstreifens (201) durch den ersten Elektrodenmaterialstreifen (201) durchgehen, sind.

4. Laminiermaschine (100) nach Anspruch 3, **dadurch gekennzeichnet, dass** die Durchgangslöcher ein oder mehrere von kreisförmigen Löchern, rechteckigen Löchern oder Streifenlöchern umfassen.

5. Laminiermaschine (100) nach Anspruch 1, **dadurch gekennzeichnet, dass** die Falten Faltenbereiche, die sich entlang der Breitenrichtung des ersten Elektrodenmaterialstreifens (201) erstrecken, sind, und eine Dicke der Faltenbereiche des ersten Elektrodenmaterialstreifens (201) kleiner ist als eine Dicke anderer Positionen des ersten Elektrodenmaterialstreifens (201).

## Revendications

1. Machine à stratifier (100), **caractérisée en ce que** la machine à stratifier (100) comprend un dispositif composite (10), le dispositif composite (10) comprend :
un premier mécanisme de déroulement de bande de matériau d'électrode (11) configuré pour dérouler une première bande de matériau d'électrode (201) ;
un mécanisme de pliage (12) placé en aval du premier mécanisme de déroulement de bande de matériau d'électrode (11) et configuré pour former une pluralité de pliures espacées dans le sens de la longueur de la première bande de matériau d'électrode (201) et se prolongeant dans le sens de la largeur de la première bande de matériau d'électrode (201) sur la première bande de matériau d'électrode (201) en un chemin ;
un premier mécanisme composite (13) placé en aval du mécanisme de pliage (12) et configuré pour combiner un premier diaphragme (202) et un deuxième diaphragme (203) sur les côtés opposés de la première bande de matériau d'électrode (201) pour former une première bande de matériau composite (200) ; et
un premier mécanisme de déroulement de diaphragme (14) et un deuxième mécanisme de déroulement de diaphragme (15), et le premier mécanisme de déroulement de diaphragme (14) et le deuxième mécanisme de déroulement de diaphragme (15) sont tous deux placés en amont du premier mécanisme composite (13) ; le premier mécanisme de déroulement de diaphragme (14) est configuré pour dérouler le premier diaphragme (202), et le deuxième mécanisme de déroulement de diaphragme (15) est configuré pour dérouler le deuxième diaphragme (203),
une feuille pliée est formée entre deux pliures adjacentes sur la première bande de matériau d'électrode (201) ;
la machine à stratifier (100) comprend en outre un premier dispositif de matériau de feuille (20), un deuxième dispositif de matériau de feuille (30), et un deuxième mécanisme composite (40) ;
dans lequel le premier dispositif de matériau de feuille (20) comprend un deuxième mécanisme de déroulement de bande de matériau d'électrode (21) et un premier mécanisme de découpe (22), le deuxième mécanisme de déroulement de bande de matériau d'électrode (21) est configuré pour dérouler une deuxième bande de matériau d'électrode (400), le premier mécanisme de découpe (22) est placé en aval du deuxième mécanisme de déroulement de bande de matériau d'électrode (21), et le premier mécanisme de découpe (22) est configuré pour couper la deuxième bande de matériau d'électrode (400) pour former le premier matériau de feuille (301),
dans lequel le deuxième dispositif de matériau de feuille (30) comprend un troisième mécanisme de déroulement de bande de matériau d'électrode (31) et un deuxième mécanisme de découpe (32), le troisième mécanisme de déroulement de bande de matériau d'électrode (31) est configuré pour dérouler une troisième bande de matériau d'électrode (500), le deuxième mécanisme de découpe (32) est placé en aval du troisième mécanisme de déroulement de bande de matériau d'électrode (31), et le deuxième mécanisme de découpe (32) est configuré pour couper la troisième bande de matériau d'électrode (500) pour former le deuxième matériau de feuille (302),
le premier dispositif de matériau de feuille (20) est configuré pour placer une pluralité de premiers matériaux de feuilles (301) sur une surface latérale de la bande de matériau composite (200), le deuxième dispositif de matériau de feuille (30) est configuré pour placer une pluralité de deuxièmes matériaux de feuilles (302) sur une autre surface latérale de la première bande de matériau composite (200), et le premier matériau de feuille (301) et le deuxième matériau de feuille (302) sont placés sur deux côtés de l'une de deux feuilles pliées adjacentes ;
le deuxième mécanisme composite (40) est placé en aval du premier dispositif de matériau de feuille (20) et du deuxième dispositif de matériau de feuille (30) et est configuré pour combiner le premier matériau de feuille (301) et le deuxième matériau de feuille (302) avec la première bande de matériau composite (200), de sorte que le premier matériau de feuille (301) et le deuxième matériau de feuille (302) sont attachés à la première bande de matériau composite (200) pour former une troisième bande de matériau composite (304),
la troisième bande de matériau composite (304) comprend une pluralité de troisièmes composants d'empilement (3041) et une pluralité de quatrièmes composants d'empilement (3042), et les troisièmes composants d'empilement (3041) et les quatrièmes composants d'empilement (3042) sont raccordés alternativement ; les troisièmes composants d'empilement (3041) comprennent le premier matériau de feuille (301), le premier diaphragme (202), la feuille pliée, le deuxième diaphragme (203), et le deuxième matériau de feuille (302) qui sont empilés en séquence, et les quatrièmes composants d'empilement (3042) comprennent le premier diaphragme (202), la feuille pliée, et le deuxième diaphragme (203) qui sont empilés en séquence,
**caractérisée en ce que**
la machine à stratifier (100) comprend en outre un troisième dispositif de stratification (70), et le troisième dispositif de stratification (70) est placé en aval du deuxième mécanisme composite (40) et est configuré pour plier la troisième bande de matériau composite (304) le long de la pliure, de sorte que la pluralité de troisièmes composants d'empilement (3041) et la pluralité de quatrièmes composants d'empilement (3042) sont empilés alternativement pour former une cellule de batterie,
dans lequel le dispositif de stratification (70) comprend une plateforme de stratification (71) et une griffe de serrage (72) et une plaque de pression (73), dans laquelle la plateforme de stratification (71) peut aller et venir dans le sens vertical, la griffe de serrage (72) va et vient entre une terminaison de décharge de matériau du deuxième mécanisme composite (40) et la plateforme de stratification (71) et est utilisée pour serrer la troisième bande de matériau composite (304) et pour plier la troisième bande de matériau composite (304) et la placer sur la plateforme de stratification (71), et la plaque de pression (73) peut aller et venir dans le sens vertical et est utilisée pour faire pression sur la cellule de batterie sur la plateforme de stratification (71),
dans laquelle le dispositif de stratification (70) inclut en outre un élément de pression (74), et l'élément de pression (74) peut se déplacer dans le sens vertical avec la plateforme de stratification (71) et peut se déplacer par rapport à la plateforme de stratification (71) pour faire pression sur la cellule de batterie.

2. Machine à stratifier (100) selon la revendication 1, **caractérisée en ce que** le mécanisme de pliage (12) comprend une tête de découpe laser ou une lame coupante.

3. Machine à stratifier (100) selon la revendication 1, **caractérisée en ce que** les pliures sont des trous pénétrants espacés en séquence dans le sens de la largeur de la première bande de matériau d'électrode (201) et pénétrant la première bande de matériau d'électrode (201) dans le sens de son épaisseur.

4. Machine à stratifier (100) selon la revendication 3, **caractérisée en ce que** les trous pénétrants comprennent un ou plusieurs trous circulaires, trous rectangulaires, ou trous en forme de bande.

5. Machine à stratifier (100) selon la revendication 1, **caractérisée en ce que** les pliures sont des zones pliées se prolongeant dans le sens de la largeur de la première bande de matériau d'électrode (201), et l'épaisseur des zones pliées de la première bande de matériau d'électrode (201) est inférieure à l'épaisseur des autres positions de la première bande de matériau d'électrode (201).
